(19) Europäisches Patentamt
European Patent Office
Office européen des brevets

(11) EP 1 935 938 A1

(12) EUROPEAN PATENT APPLICATION

(43) Date of publication:
**25.06.2008 Bulletin 2008/26**

(21) Application number: **06026236.7**

(22) Date of filing: **18.12.2006**

(51) Int Cl.:
***C08L 23/10*** *(2006.01)* ***C08L 23/12*** *(2006.01)*
***C08L 23/14*** *(2006.01)* ***C08L 23/16*** *(2006.01)*
***C08F 10/06*** *(2006.01)* ***C08F 210/06*** *(2006.01)*
***C08F 297/08*** *(2006.01)* ***C08K 5/00*** *(2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Borealis Technology Oy**
**06101 Porvoo (FI)**

(72) Inventors:
- **Malm, Bo**
**02110 Espoo (FI)**
- **Tuominen, Olli**
**00930 Helsinki (FI)**
- **Vestberg, Torvald**
**06100 Porvoo (FI)**
- **Korhonen, Esa**
**06100 Porvoo (FI)**

(74) Representative: **Kador & Partner**
**Corneliusstrasse 15**
**80469 München (DE)**

Remarks:
Amended claims in accordance with Rule 137(2) EPC.

# (54) Improved high melt flow heterophasic polypropylene copolymers

(57) The present invention relates to a heterophasic polypropylene composition with a high melt flow rate for processability, a good stiffness and an improved compression performance. These compositions may be employed for the production of moulded articles, in particular injection moulded articles such as thin-walled plastic cups. Furthermore, the invention relates to a process for preparing the inventive polymer compositions.

EP 1 935 938 A1

## Description

The present invention relates to a heterophasic polypropylene composition with an improved combination of processability, stiffness and drop test performance. These compositions may be employed for the production of moulded articles, in particular injection moulded articles such as thin-walled plastic containers. Furthermore, the invention relates to a process for preparing the polymer compositions.

Injection moulded parts for thin-walled packaging applications such as food packaging and plastic cups place specific requirements on the polymeric materials employed to produce these articles. Of paramount importance for these mass production applications is a good processability, which generally manifests itself in a high melt flow rate of the corresponding compositions. On the other hand, the articles must provide sufficient stiffness to hold the content such as foodstuffs contained therein as well as having sufficient stiffness to be stacked. Finally, the materials should also withstand mechanical compression damage, which is frequently incurred by e.g. dropping the articles.

Polypropylene-based polymers have many characteristics, which make them suitable for applications such as moulded articles, but also pipes, fittings and foams.

Frequently, polypropylene products of high stiffness are based on high molecular weight materials, which are often nucleated by adding nucleating agents, i.e. crystallization starts at a higher temperature and the crystallization speed is high.

However, to increase the output rate during extrusion, a polymer of high flowability is generally preferred. This processability requirement can be achieved by low molecular weight compositions with a low viscosity, i.e. high melt flow rate (MFR) compositions, which albeit usually have less stiffness.

In addition, stiffness affording compositions are usually brittle and thus products generated from these materials display poor impact resistance and are susceptible to structural damage when dropped.

Therefore, a general problem for polypropylene compositions used in these applications is to reconcile the opposed requirements of high processability, stiffness and compression integrity.

An aspect of this problem, which has been focussed on in the state of the art is to combine a high melt flow polypropylene matrix-phase material with a low melt flow, elastomeric polypropylene-ethylene copolymer disperse-phase material (EPR rubber). These combined heterophasic materials often display better impact strength due to the rubber particles dispersed in the PP matrix phase. Nevertheless, the downside of these compositions is a reduced overall melt flow rate. Such heterophasic copolymers are disclosed in US 2005/0038208. However, the examples presented do not meet the high MFR requirements for processability. Achieving high enough MFR values of the matrix phase to afford the target melt flow of the overall composition is a frequently encountered problem. On the other hand, reaching a high rubber content is also desired. Furthermore, while the invention by Dahn et al. focuses on impact strength it does not consider the compression performance of materials produced from the compositions.

Another method for increasing the melt flow of heterophasic polypropylene, which is termed "visbreaking" is disclosed in EP 1 354 901. Therein the polyolefin compositions are melted and treated with organic peroxides, which rupture long chained polymer molecules, thus reducing chain length and increasing MFR. However, visbreaking has a number of disadvantages, such as inducing an annoying odour, as well as sacrifices in rigidity and thermostability. Naturally, it would be advantageous to achieve these properties in a reactor-made composition, without an additional treatment stage. Furthermore, this patent disclosure does not mention drop test properties nor the compression stability aspect of the produced propylene copolymer articles in general.

In EP 0 790 262 high MFR propylene-ethylene copolymers have been achieved. However, also here there is no disclosure of drop test or top load values of the compositions. The subject of compression properties has not been considered. In addition, problems in dispersing the rubber in the matrix phase are encountered.

Thus, there is a need for polypropylene-based compositions for injection moulded articles having good processability, while at the same time achieving superior compression resistance. Considering the problems discussed above, it is an object of the present invention to provide a polypropylene-based composition that can be processed at lower melt temperatures and/or melt pressure, but still results in a material of high stiffness, and an excellent compression stability, in particular at low temperatures.

The present invention is based on the finding that the above objects can be achieved in a polypropylene composition with a high melt flow rate and an increased compression energy absorption in the rubber phase of the polypropylene composition.

The invention thus provides a polypropylene composition comprising a heterophasic propylene copolymer comprising:

a) a matrix phase (A) comprising a propylene homopolymer and/or a propylene copolymer, and

b) a disperse phase (B) comprising a propylene copolymer rubber dispersed in matrix phase (A),

wherein

(i) the polypropylene composition has a melt flow rate $MFR_2$ of 50 g/10min or higher,

(ii) the propylene copolymer rubber of the disperse phase (B) has a comonomer content of 40 wt.% or higher, and

(iii) the intrinsic viscosity IV of the disperse phase (B) and the $MFR_2$ of the matrix phase (A) fulfil the following relationship:

$$\frac{\log_{10}(MFR_2(A))}{IV(B)} \geq 0.60 .$$

With regard to the ratio between the melt flow rate of the matrix and the intrinsic viscosity of the disperse phase, as expressed in feature (iii), while a high ratio is desired for optimising the mechanical properties, it was found that this difference should not be too great, because this may cause difficulties in dispersing the rubber in the matrix phase. Furthermore, preferably the ratio of the $MFR_2$ of the matrix phase to the IV of the disperse phase should be greater or equal to 0.66, more preferably greater or equal to 0.75, even more preferably greater or equal to 1.00 and most preferably greater or equal to 1.20.

An essential feature of the composition of the present invention is the presence of a disperse phase in the heterophasic propylene copolymer comprising an elastomeric copolymer rubber of propylene and at least one olefin comonomer in a comparably high amount of 40 wt.% or more. The presence of such an elastomeric propylene copolymer improves the impact performance of the final polymer.

In the context of the invention the terms "rubber" and "elastomeric copolymer" are used synonymously. The conditions for the copolymerisation are within the limits of conventional conditions for the ethylene-propylene rubber (EPR) production. Typical conditions are disclosed in e.g. Encyclopaedia of Polymer Science and Engineering, second edition, vol. 6, p. 545 to 558. An elastomeric product is obtained when the comonomer content of the polymer is within a certain range.

Preferably, the heterophasic propylene copolymer consists of matrix phase (A) and disperse phase (B).

It is further preferred that the matrix phase comprises, more preferably consists of, a propylene homopolymer. In the context of the invention, the term homopolymer denotes a polymer with less than 1 wt.% comonomer. Thus, the homopolymer of the invention can preferably also be a minirandom copolymer.

If however, the matrix phase (A) comprises a propylene copolymer, it is preferred that the comonomers are selected from ethylene or a $C_4$ to $C_{10}$ alpha-olefin such as 1-butene, 1-pentene, 1-hexene, 1-octene, 4-methyl-1-pentene or 3-methyl-1-pentene, or any combination of these. Most preferred is that the comonomer is ethylene.

Preferably, the propylene homopolymer and/or copolymer of the matrix phase comprises at least 75 mol% propylene units.

Preferably, the $MFR_2$ (measured at 2.16 kg/230°C) of the composition is 60 g/10min or higher, more preferably 65 g/10min or higher, even more preferably 75 g/10min or higher. The $MFR_2$ of the composition will usually be below 300 g/10min.

Furthermore, according to the present invention, the propylene copolymer rubber of the disperse phase preferably has a comonomer content of 45 wt.% or higher, more preferably 48 wt.% or higher and even more preferably 50 wt.% or higher.

In a preferred embodiment, the comonomers of the propylene copolymer rubber of the disperse phase (B) are selected from ethylene or a $C_4$ to $C_{10}$ alpha-olefin such as 1-butene, 1-pentene, 1-hexene, 1-octene, 4-methyl-1-pentene or 3-methyl-1-pentene, or any combination of these. Ethylene is the most preferred comonomer.

Furthermore, by preference, the total comonomer content of the heterophasic propylene copolymer, as measured by FTIR, is at least 6.5 wt.%, more preferably at least 7.0 wt.%, and most preferably at least 8.0 wt.%.

Still further, preferably the following relationship between the melt flow rate of the matrix phase (A) and the melt flow rate of the rubber phase (B) is fulfilled:

$$0.01 < \log_{10}\left(\frac{MFR_2(A)}{MFR_2(B)}\right) < 3.9$$

More preferably, the lower limit in the above relation is, greater than 0.1, and still more preferably, greater than 0.2. Preferably the upper limit in the above relation is 3.0, more preferably less than 2.5, even more preferably less than 2.0 and most preferably less than 1.5. The $MFR_2$(B) can be calculated from the mixing rule, when $MFR_2$(final) and $MFR_2$ (A) are known. According to the mixing rule the following condition is satisfied:

$$\frac{1}{(\log_{10} MFR_2(final))} = \frac{weight\ fraction\,(A)}{(\log_{10} MFR_2(A))} + \frac{weight\ fraction\,(B)}{(\log_{10} MFR_2(B))}$$

The polypropylene copolymer disperse phase may have a unimodal molecular weight distribution. In such a case, the rubber is preferably made of the polypropylene random copolymer only. However, it might also comprise one or more additional polymeric components having a molecular weight adapted to the molecular weight of the random copolymer so as to maintain the unimodal molecular weight distribution and/or bimodal comonomer distribution.

However, according to a preferred embodiment, the polypropylene copolymer disperse phase (B) has a multimodal, preferably a bimodal molecular weight distribution.

The expression "multimodal" used herein refers to the modality of the polymer, i.e. the form of its molecular weight distribution curve, which is the graph of the molecular weight fraction as a function of its molecular weight. As will be explained below, the polymer components of the present invention can be produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution curve of the final polymer, that curve may show two or more maxima or at least be distinctly broadened when compared with curves for the individual fractions. Such a polymer, produced in two or more serial steps, is called bimodal or multimodal, depending on the number of steps.

In addition, also the polypropylene-based matrix phase (A) can comprise further polymeric components, in particular for obtaining a multimodal matrix. The polypropylene matrix phase (A) can thus be unimodal or multimodal, preferably bimodal in molecular weight distribution or in comonomer distribution. In this regard, the polypropylene matrix phase is preferably a bimodal polymer, preferably a homo-homo copolymer or a homo-random copolymer.

Furthermore, preferably the intrinsic viscosity IV of the disperse phase (B) of the heterophasic propylene copolymer as measured according to ISO 1628, is in the range from 1.8 to 3.0 dl/g, more preferably from 1.9 to 2.3 dl/g. It is furthermore preferred that the value of the intrinsic viscosity in the disperse phase IV(B) is greater or equal to 1.5 dl/g and more preferably greater or equal to 1.8 dl/g. Notably, too low rubber viscosities in the disperse phase can reduce the compression resistance of the compositions. On the other hand, high viscosity differences between the rubber and the matrix phase can cause problems in dispersing.

The IV(A) can be estimated as being 1.0 dl/g at an $MFR_2$ value of 200 g/10min. Therefore, it is preferred that the ratio IV(B)/IV(A) is greater than 1.2, more preferably greater than 1.5 and most preferably greater than 1.8. In addition, the value of IV(B)/IV(A) should preferably be less than 4.5, more preferably less than 3.0 and most preferably less than 2.5.

In addition, preferably the polypropylene composition is nucleated with a nucleating agent. More preferably, the polymer is nucleated with polymeric vinyl cyclohexane (VCH) or a similar nucleating agent.

To achieve the high final melt flow rate of the composition the MFR of the matrix phase should be high, so as to counter the MFR-lowering effect of the low flow rubber phase. Naturally, reaching such high MFR values can be difficult. Nevertheless, they have been achieved in the current invention. Thus, it is preferred that the $MFR_2$ of the matrix phase (A) is from 150 to 300 g/10min, more preferably from 200 to 240 g/10min. Preferably, the $MFR_2$ of the matrix phase (A) is greater or equal to 200 g/10min.

In a preferred embodiment, the ratio of the matrix-phase $MFR_2$ to the $MFR_2$ of the polypropylene composition is greater than or equal to 2.

According to a further preferred feature, the amount of xylene solubles (XS) of the heterophasic copolymer is

from 15 to 30 weight%, more preferably from 15 to 25 wt.%, most preferred is 16 to 22 wt.%, even more preferably greater or equal to 15 wt.%, most preferably above 16 wt.%.

Also preferred is that the amount of the disperse phase (B) of the heterophasic copolymer is from 5 to 40 wt. %, more preferably is from 10 to 30 wt.%, and most preferably is from 12 to 25 wt.%.

The amount of the disperse phase is measured by the amount of amorphous phase (AM) present in the composition. As indicated above, the presence of an elastomeric ethylene-propylene copolymer disperse phase improves impact properties. However, if the amount of elastomeric copolymer within the final polymer composition is too high, this can have a detrimental effect on other properties such as stiffness or processability.

Preferred is also that the polypropylene composition has a melting temperature $T_m$, as measured by DSC, of 160 to 167 °C, more preferably of 165 to 167 °C. Furthermore, preferably the polypropylene composition has a crystallization temperature $T_C$, as measured by DSC, of 125 to 134 °C, more preferably of 127 to 133 °C.

As stated above, it was surprisingly found that the compression resistance of articles produced from the inventive compositions can be improved. In fact, the size of the copolymer rubber particles dispersed in the matrix phase of the inventive compositions was found to be larger than in the comparative examples. This can be seen in Figure 1, which shows scanning electron microscopy (SEM) and transmission electron microscopy (TEM) images of thin-walled cup side samples produced from a state of the art polymer composition on the left and the inventive polymer composition on the right. Accordingly, the inventive compositions have average particle sizes of about 2.0 μm, whereas the average rubber particle sizes in the comparative examples are about 1 μm. These larger rubber particles appear to improve the compression energy adsorption of the cups.

Therefore, preferably the propylene copolymer rubber (B) particles, which are dispersed in the matrix phase (A) of the polypropylene composition, have at least 50 %, more preferably at least 75 %, of particles with average particle sizes of from 1.5 to 2.5 μm, as determined from TEM images of cup wall sides produced by injection moulding of the inventive polypropylene composition.

The present invention also provides a process for the preparation of a heterophasic polypropylene copolymer.

This process comprises the following stages (i) and (ii) in any sequence:

(i) preparation of the matrix phase of the heterophasic copolymer of the polypropylene composition, wherein stage (i) comprises the following steps:

B2) polymerisation of propylene to afford a polypropylene homopolymer, or the copolymerisation of propylene with an olefin comonomer to result in a polypropylene copolymer, step B2 being conducted in at least one slurry phase reactor, and

B3) polymerisation of propylene to afford a polypropylene homopolymer, or the copolymerisation of propylene with an olefin comonomer to result in a polypropylene copolymer, step B3 being conducted in at least one gas phase reactor.

(ii) preparation of the disperse phase of the heterophasic copolymer of the polypropylene composition, wherein stage (ii) comprises the following step:

B4) copolymerisation of propylene with an olefin comonomer to result in an olefin-propylene copolymer, step B4 being conducted in at least one gas phase reactor, and wherein:

a) the process step B2 is conducted at a reactor temperature of between 70 and 110 °C and

b) the process step B3 is conducted at a reactor temperature of higher than or equal to 90 °C, and

c) the process step B4 is conducted at a reactor temperature of higher than 75 °C.

In a preferred embodiment of the process, a heterophasic polypropylene contained in the polypropylene composition of the invention in any of the embodiments as described hereinbefore is produced.

Preferably, the reaction steps are conducted in a cascade of reactors connected in series with one another. Optionally, the cascade may comprise intermediate containers, such as cylindrical tanks, stirring vessels or cyclones between discharge and transfer of the polymerisation materials from either of the reactors.

According to a preferred embodiment, the reaction stage (i) is carried out in at least one slurry phase reactor. Preferably, stage (i) also comprises at least one gas phase reactor to which the product of a first reactor can be transferred to continue the polymerisation. The slurry from the reaction step B2 may be withdrawn from the reactor by any known means. Furthermore, when the slurry from reaction step B2 is transferred to the next reaction step B3, it may be subjected

to any treatment known in the art to remove a part or all of the volatile components of the reaction mixture. Preferably, the slurry from the reaction step B2 is continuously withdrawn from the reactor and transferred directly into the gas phase reactor of reaction step B3 without removing volatile components from the reaction mixture. Furthermore, preferably reaction stage (ii) is carried out in at least one gas phase reactor.

For the present invention, conventional slurry phase and gas phase reactors, which are commonly known in the relevant technical field can be used. Preferably, the slurry phase reactors are conducted in a continuous loop arrangement, i.e. so-called loop reactors.

The gas-phase polymerisation reactor preferably comprises one or more vertical fluidised beds. Nitrogen and monomers in the gaseous state, as well as the catalyst are preferably fed to the reactor and the solid product is removed continuously or periodically, preferably continuously. The heat of reaction is dissipated through the use of the circulating gas that also serves to fluidise the polymer bed. Solvents are not used, thereby eliminating the need for solvent stripping, washing and drying.

It is further preferred that a slurry phase reactor in process step B2 is operated at a temperature of 75 °C to 110 °C, preferably 80 to 95 °C, most preferably 80 to 90 °C.

Preferably, a slurry phase reactor in process step B2 for preparing a polypropylene homopolymer or copolymer is operated at a pressure of 3000 kPa to 8500 kPa, preferably of 5000 kPa to 6000 kPa, more preferably 5400 kPa to 5500 kPa. In a preferred embodiment, at least one slurry phase reactor is operated under supercritical conditions. For example, supercritical conditions can include a temperature of at least 92 °C and a pressure of at least 4600 kPa.

Furthermore, preferably the gas phase reactor in process step B3 is operated at a temperature of from 90 to 110 °C, more preferably of from 90 °C to 100 °C.

In a most preferred embodiment the reactor temperature in process step B3 is higher or equal to 95 °C.

Still further, preferably the gas phase reactor in step B3 is operated at a pressure of 1500 kPa to 4000 kPa, more preferably of 3000 to 3500 kPa.

Surprisingly, such unusually high reactor temperatures are possible for the production of the current heterophasic polypropylene copolymer, thereby increasing reactor production and enabling the generation of a high melt flow matrix phase (A) with $MFR_2$ greater than 200 g/10min, even with high amounts of external donor and without loosing the stiffness.

In addition, it is possible to reduce the aluminium alkyl/donor ratio in the catalyst system to at most 50 mol/mol. In this way a high stiffness of the matrix phase can be achieved. Preferably, the aluminium alkyl/donor ratio in the catalyst system is less than or equal to 20 mol/mol.

Furthermore, preferably the reactor in process step B4 is operated at preferably 80 to 95 °C, more preferably from 85 to 92 °C, even more preferably from 85 to 90 °C. In a most preferred embodiment, the reactor temperature in process step B4 is higher or equal to 85 °C.

Furthermore, preferably the gas phase reactor in step B4 is operated at a pressure of 1500 kPa to 4000 kPa, more preferably of 2700 kPa to 3300 kPa.

These high reactor temperatures enable the production of high molecular weight rubber particles, which have a high intrinsic viscosity. While this would normally lead to a drop in MFR of the overall composition, in combination the high reactor temperatures in steps B3 it is possible to still achieve high MFR values of greater of equal to 70 g/10min for the final polypropylene copolymer compositions. In addition, operating the reactors at the higher temperatures of the invention increases the production rate of the process.

Preferably, the comonomer ratio (CR) between the ethylene to propylene in the reactor of process step B4 is greater than 500 mol/kmol, more preferably is greater or equal to 600 mol/kmol, even more preferably is greater or equal to 750 mol/kmol, most preferably is greater or equal to 900 mol/kmol. These comonomer conditions generate ethylene rich copolymers that produce stable and large rubber particles dispersed in the matrix phase, as described above.

It is further preferred that the hydrogen to comonomer ratio in the reactor of process step B4 is less than or equal to 300 mol/kmol, more preferably less than or equal to 180 mol/kmol. Due to the higher production rates in the B4 rubber reactor and the consequent decrease in viscosity of the disperse phase polymer, the hydrogen feed can be reduced to maintain a constant intrinsic viscosity of the rubber copolymer produced in this reactor, cf. the comparative examples.

Preferably, the olefin comonomer of the polypropylene copolymer produced in either of the process steps is ethylene or a $C_4$ to $C_{10}$ alpha-olefin such as 1-butene, 1-pentene, 1-hexene, 1-octene, 4-methyl-1-pentene or 3-methyl-1-pentene, or any combination of these.

In one embodiment, reaction conditions are chosen, which result in the production of a unimodal polypropylene copolymer. However, within the present invention, it is also possible to effect polymerisation of the copolymer under conditions, which result in a multimodal, e.g. bimodal polymer. This is preferably accomplished by using a serial configuration with one or more slurry and/or gas phase reactors.

The process stage (ii) preferably also comprises, after step B4, a further step B5 comprising the copolymerisation of propylene with an olefin comonomer to result in an olefin-propylene copolymer. In serial configuration with step B4,

this arrangement can afford a bimodal composition as described above. Thus, the disperse phase rubber produced in stage (ii) can preferably be of multimodal nature, preferably bimodal.

Preferably, the process for the preparation of the heterophasic polypropylene copolymer further comprises, prior to the other steps, a pre-polymerisation step B1) comprising the polymerisation of propylene to afford a polypropylene homopolymer or copolymerisation of propylene with an olefin comonomer to result in a polypropylene copolymer.

Preferably, the temperature in process step B1 is between 10 °C and 50 °C. More preferably, the reactor temperature in process step B1 is between 28 °C and 40 °C.

Further, preferably the process steps B 1 and/or B5 are carried out in at least one slurry phase reactor and/or at least one gas phase reactor.

It is preferred that the process steps are carried out in the following order: optionally B1, B2, B3 and B4.

To further improve the balance between processability and mechanical properties of the polymer composition, a specific split between the process step B2 and the process step B3 can be chosen. The split indicates the weight ratio of the different polymeric components prepared in the reaction steps. Preferably, the split between process step B2 and process step B3, irrespective of their sequence, is from 95 : 5 to 30 : 70, more preferably from 80 : 20 to 40 : 60 and even more preferably from 70 : 30 to 50 : 50.

The process preferably comprises a catalyst for the preparation of the polypropylene copolymer. This catalyst can be any stereo-specific catalyst for propylene polymerisation, which preferably is capable of catalysing the polymerisation and copolymerisation of propylene and comonomers at a pressure of 500 to 10000 kPa, in particular 2500 to 8000 kPa, and at a temperature of 40 to 110 °C, in particular of 60 to 110 °C. Preferably, the catalyst comprises a high-yield Ziegler-Natta type catalyst, which can be used at high polymerisation temperatures of 80 °C or more. Further preferred catalysts are metallocene catalysts.

Furthermore, it is preferred to use catalysts, which can withstand the high temperatures prevailing in the slurry phase reactor. Conventional Ziegler-Natta catalysts for isotactic polymerisation of propylene generally have an operating temperature limit of around 80 °C, above which they either become deactivated or lose their stereo-selectivity. This low polymerisation temperature may limit the heat removal efficiency of the slurry phase (loop) reactor.

Preferably, the Ziegler-Natta catalyst used in the present invention comprises a procatalyst component (a), a cocatalyst component (b) and an external electron donor (c).

In a preferred embodiment, the procatalyst component (a) of the catalyst system primarily comprises magnesium, titanium, halogen and an internal electron donor. Internal electron donors control the stereospecific properties and/or improve the activity of the catalyst system. A number of electron donors including ethers, esters, polysilanes, polysiloxanes, and alkoxysilanes are known in the art.

The procatalyst component (a) preferably comprises a transition metal compound. The transition metal compound is more preferably selected from the group consisting of titanium compounds having an oxidation state of 3 or 4, vanadium compounds, zirconium compounds, cobalt compounds, nickel compounds, tungsten compounds and rare earth metal compounds, of which titanium trichloride and titanium tetrachloride are particularly preferred.

One preferred catalyst to be used according to the invention is disclosed in EP 591 224, which presents a method for preparing a procatalyst composition from magnesium dichloride, a titanium compound, a lower alcohol and an ester of phthalic acid containing at least five carbon atoms.

According to EP 591 224, a trans-esterification reaction is carried out at an elevated temperature between the lower alcohol and the phthalic acid ester, whereby the ester groups of the lower alcohol and the phthalic ester change places.

Preferably, magnesium dichloride can be used as such or it can be combined with silica, e.g. by absorbing the silica with a solution or slurry containing magnesium dichloride. The lower alcohol used may preferably be methanol or ethanol, particularly ethanol.

The titanium compound used in the preparation of the procatalyst is preferably an organic or inorganic titanium compound in the oxidation state of 3 or 4. Also other transition metal compounds, such as vanadium, zirconium, chromium, molybdenum and tungsten compounds can be mixed with the titanium compound. The titanium compound usually is a halide or oxyhalide, an organic metal halide, or a purely metal organic compound in which only organic ligands have been attached to the transition metal. Particularly preferred are the titanium halides, especially titanium tetrachloride.

The alkoxy group of the employed phthalic acid ester comprises at least five carbon atoms, preferably at least eight carbon atoms. Thus, the ester may be e.g. propylhexyl phthalate, dioctyl phthalate, di-isodecyl phthalate and ditridecyl phthalate. The molar ratio of phthalic acid ester and magnesium halide is preferably about 0.2 : 1.

The transesterification can be carried out, e.g. by selecting a phthalic acid ester - a lower alcohol pair, which spontaneously or by the aid of a catalyst, which does not damage the procatalyst composition, transesterifies the catalyst at an elevated temperature. It is preferred to carry out the transesterification at a temperature of 110 °C to 115 °C, preferably 120 °C to 140 °C.

In one preferred embodiment, the Ziegler-Natta catalyst system can be modified by polymerising a vinyl compound in the presence of the catalyst, which vinyl compound has the formula:

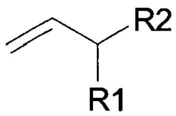

wherein $R_1$ and $R_2$ together form a 5- or 6-membered saturated, unsaturated or aromatic ring or independently represent an alkyl group comprising 1 to 4 carbon atoms, and the modified catalyst is used for the preparation of the polymer composition. The polymerised vinyl compound can act as a nucleating agent. Further details about this modification are provided in EP 1 028 985.

In addition, the catalyst prepared by the method above is preferably employed together with an organometallic cocatalyst (b). The organoaluminium compound is preferably selected from the group consisting of trialkyl aluminium, dialkyl aluminium chloride, alkyl aluminium sesquichloride and triethyl aluminium (TEAL). Most preferred is triethyl aluminium (TEAL).

Preferably the aluminium alkyl/titanium ratio in the catalyst is between 150 and 250 mol/mol. It is further preferred that the cocatalyst to external electron donor ratio (b)/(c) is less than or equal to 50 mol/mol, more preferably less than or equal to 20 mol/mol.

Furthermore, the catalyst prepared by the method above is preferably employed together with an external donor (c). Generally, the external donor has the formula

$$R_nR'_mSi(R''O)_{4-n-m}$$

wherein R and R' can be the same or different and represent a linear, branched or cyclic aliphatic, or aromatic group, R" is methyl or ethyl, n is an integer of 0 to 3, m is an integer of 0 to 3 and n+m is 1 to 3.

In particular, the external donor is selected from the group consisting of cyclohexylmethylmethoxysilane (CHMMS), diisopropyldimethoxysilane, di-isobutyldimethoxysilane, and di-t-butyldimethoxysilane, and dicyclopentyldimethoxysilane (DCPDMS). Most preferred is dicyclopentyldimethoxysilane (DCPDMS).

According to the invention, such catalysts are preferably introduced into the first reactor only. The components of the catalyst can be fed into the reactor separately or simultaneously. Alternatively, the components of the catalyst system can be pre-contacted prior to the reactor. Such precontacting can also include a catalyst pre-polymerisation stage prior to feeding into the polymerisation reactor proper. In the pre-polymerisation stage, the catalyst components are preferably contacted for a short period with a monomer before being fed to the reactor.

It is particularly preferred that the catalyst is a nucleated catalyst. Preferably, the catalyst is nucleated with polymeric vinyl cyclohexane (VCH).

The catalytic system described above is preferably used for the preparation of the polypropylene homopolymer and/or copolymer in stage (i). Preferably, the catalytic system described above is also used for the preparation of the elastomeric copolymer in stage (ii).

In a preferred embodiment the polypropylene homopolymer or random copolymer of stage (i) is prepared first, and the elastomeric copolymer is prepared in a final stage (ii). Preferably, the elastomeric rubber copolymer is prepared in a gas phase reactor. Optionally, two or more gas phase reactors can be used. The one or more gas phase reactors for the preparation of the elastomer can be in serial configuration with the reactors used for the preparation of the homopolymer and/or random copolymer of stage (i). When using such a reactor configuration, the elastomeric copolymer is produced in the presence of the homopolymer/random copolymer matrix and dispersed therein. As an alternative, the elastomeric copolymer can be prepared separately and mixed with the polypropylene-based matrix at a later stage.

In general, the conditions for the preparation of the elastomeric copolymer are within the limits of conventional conditions for ethylene-propylene rubber (EPM) production. Typical conditions are disclosed e.g. in Encyclopaedia of Polymer Science and Engineering, second edition, vol. 6, p. 545-558.

In addition to the components discussed above, the polymer composition may comprise conventional adjuvants, such as additives, fillers and reinforcing agents or additional impact modifiers.

The following are optional additives: nucleating agents, process and heat stabilisers, pigments and other colouring agents including carbon black. Depending on the type of additive, these may be added in an amount of 0.001 to 10 wt.%, based on the weight of the polymer composition.

In a preferred embodiment, the polymer composition includes 0.05 to 3 wt% based on the weight of the polymer composition, of one or more alpha-nucleating agents such as talc, polymerised vinyl compounds such as polyvinylcyclohexane, dibenzylidene sorbitol, sodium benzoate, and di(alkylbenzylidene)sorbitol or mixtures thereof. The alpha-nucleating agent is usually added in small amounts of 0.0001 to 1 wt.%, more preferably 0.001 to 0.7 wt.%. Since talc

can act both as a nucleating agent and as a filler, it can be added in higher amounts. When added as a nucleating agent, talc is preferably added in an amount of 0.05 to 3 wt%, more preferably 0.1 to 2 wt.%, most preferably less than 1 wt. %, based on the weight of the polymer composition. Further details about these nucleating agents can be found e.g. in WO 99/24479 and WO 99/24501.

Further preferred additives which may be added to the inventive compositions include: antioxidants, antistatic agents, slip agents, UV stabilisers, acid scavengers. Also fillers may be added to the compositions. Any filler known in the art may be used, depending on the desired properties. Mica and talc are examples of conventionally used fillers.

In the preferred embodiments, the additives are added to the heterophasic propylene copolymer, which is collected from the final reactor of the series of reactors, to generate the polypropylene composition of the invention. Preferably, these additives are mixed into the composition prior to or during the extrusion process in a one-step compounding process. Alternatively, a master batch may be formulated, wherein the heterophasic propylene copolymer is first mixed with only some of the additives.

For mixing, a conventional compounding or blending apparatus, e.g. a Banbury mixer, a 2-roll rubber mill, Buss-co-kneader or a twin screw extruder may be used. The twin screw extruder may be co-rotating or counter-rotating, preferably co-rotating. Preferably, the composition will be prepared by blending the additives together with the polymeric material at a temperature, which is sufficiently high to soften and plasticise the polymer. The temperatures and pressures used in the operation of the extruder are known in the art. Typically the temperature may be selected from the range of 150 to 350 °C. The pressure used for extrusion preferably is 50 to 500 bar. The polymer materials recovered from the extruder are usually in the form of pellets. These pellets are then preferably further processed, e.g. by injection moulding to generate articles and products of the inventive compositions.

The compositions of the current invention are preferably used for the production of moulded articles, preferably injection moulded articles. Even more preferred is the use for the production of thin-walled containers and packaging articles, preferably plastic cups or other house-wares.

The current invention also provides articles comprising the inventive polypropylene composition. Preferably, these articles are produced by injection moulding.

Surprisingly, it was found that the inventive polypropylene compositions display improved compression stability. These effects manifest themselves in an enhanced resistance of the articles produced from these polymers to effects from top load and drop test compression, as compared to state of the art products. The top load and drop test measurements are made using thin-walled cups of the inventive compositions.

Thus, in a preferred embodiment, the top load force at collapse value, according to ASTM 2659-95, of a thin walled cup of the polypropylene composition is at least 235 N, preferably at least 265 N.

In addition, preferably the F50 drop height test value at RT of an 850 ml water-filled thin walled cup of the polypropylene composition, according to ASTM-D 2463-95, is at least 4.0 m preferably at least 4.5 m, even more preferably at least 5 m.

Furthermore, preferably the F50 drop height test value at 0 °C of a 850 ml water-filled thin walled cup of the polypropylene composition, according to ASTM-D 2463-95, is at least 1.3 m, more preferably at least 2.9 m.

Further preferred is that the F50 drop height test value at 0 °C of a 850ml thin walled cup filled with 200 ml water, according to ASTM-D 2463-95, is at least 4.0 m, more preferably at least 4.5 m, even more preferably at least 5 m.

While the compression tests show an improvement over the state of the art compositions, the stiffness of the inventive polypropylene copolymer compositions should also be maintained at a high level. To have a material of high stiffness, the polymer composition preferably has a tensile modulus, as measured by ISO 572-2, of at least 1300 MPa. In further preferred embodiments, the polymer composition of the present invention has a tensile modulus of at least 1350 MPa, even more preferably of 1500 MPa.

Furthermore, the impact strength of the polymer composition of the present invention at RT is preferably in the range of 2.0 to 6.0 kJ/m$^2$, as measured according to the notched Charpy impact test ISO 179/1eA.

In addition, the falling weight impact at 0 °C, according to ASTM 6603 of the polypropylene composition is 4 to 20 J.

The present invention will now further be illustrated by way of examples and by reference to the following figures:

Figure 1a and 1b: Scanning electron microscopy SEM images from the thin walled cup sides for a low ethylene rubber copolymer (comparative example C1) on the left and for the high ethylene rubber copolymer (example 2) on the right. The scale bar is 10 μm in length. The rubber particles dispersed in the matrix phase, indicated as black dots, are larger in the inventive example on the right.

Figures 1c and 1d: Transmission electron microscopy TEM images from the thin walled cup sides for a low ethylene rubber copolymer (comparative example C1) on the left and for the high ethylene rubber copolymer (example 2) on the right; scale bar = 5 μm. The darker patches indicated the dispersed rubber particles. Again these particles are larger in the inventive example.

## Measurement Methods

### Melt Flow Rate

Unless otherwise specified, the melt flow rate is measured as the $MFR_2$ in accordance with ISO 1133 (230°C, 2.16 kg load) for polypropylene and is indicated in g/10 min. The MFR is an indication of the flowability, and hence the processability, of the polymer. The higher the melt flow rate, the lower the viscosity of the polymer.

### Top load

The compression test used to measure the rigidity of injection moulded 850 ml cups is conducted in accordance with the standard test ASTM 2659-95 on a Zwick tensile machine operated at a velocity of 10 mm/min.

Dimensions of the cup: height 100 mm, diameter top 115 mm, diameter bottom 95 mm, bottom wall thickness 0.44 mm, side-wall thickness 0.38 mm.

### Drop height test

The drop height test was performed on 850 ml water-filled cups at 23 °C according to ASTM-D 2463-95. The height was recorded at which 50 % of the cups break in a brittle way, thus affording the F50 value. This test was also conducted at 0 °C. Finally, the test was also repeated at 0 °C for cups filled with 200 ml water.

### Xylene solubles and Amorphous phase

The xylene soluble fraction (XS) as defined and described in the present invention is determined as follows: 2.0 g of the polymer are dissolved in 250 mm p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 mm flasks. The solution from the first 100 mm vessel was evaporated in nitrogen flow and the residue dried under vacuum at 90 °C until constant weight is reached. The xylene soluble fraction (percent) can then be determined as follows:

$$XS\% = (100 \text{ x } m_1 \text{ X } v_0)/(m_0 \text{ x } v_1),$$

wherein $m_0$ designates the initial polymer amount (grams), $m_1$ defines the weight of residue (grams), $v_0$ defines the initial volume (milliliter) and $v_1$ defines the volume of the analysed sample (milliliter).

The solution from the second 100 ml flask was treated with 200 ml of acetone under vigorous stirring. The precipitate was filtered and dried in a vacuum oven at 90 °C. This solution can be employed in order to determine the amorphous part of the polymer (AM) using the following equation:

$$AM\% = (100 \text{ x } m_1 \text{ X } v_0)/(m_0 \text{ x } v_1)$$

wherein $m_0$ designates the initial polymer amount (grams), $m_1$ defines the weight of residue (grams), $v_0$ defines the initial volume (milliliter) and $v_1$ defines the volume of the analysed sample (milliliter). The disperse phase of the rubber corresponds to the amount of amorphous phase in the heterophasic polymer.

### The intrinsic viscosity (IV)

The intrinsic viscosity (IV) value increases with the molecular weight of a polymer. The IV values e.g. of the amorphous phase were measured according to ISO 1628.

### Comonomer content

The comonomer content (weight percent) is determined in a known manner based on FTIR measurements,

calibrated with $C_{13}$-NMR.

**Melting temperature, crystallization temperature**

The melting temperature $T_m$, crystallisation temperature $T_{cr}$ and degree of crystallinity are measured with a Mettler TA820 differential scanning calorimetry device (DSC) on 3 $\pm$ 0.5 mg samples. Crystallisation and melting temperatures are obtained during 10 °C/min cooling and heating scans between 30 °C and 225 °C. Melting and crystallisation temperatures were taken as the peaks of the endotherms and exotherms. The degree of crystallinity is calculated by comparison with the heat or fusion of a perfectly crystalline polypropylene, i.e. 209 J/g.

**Charpy notched impact**

Charpy notched impact is measured according to ISO 179/1eA (room temperature, if not otherwise mentioned) and at -20 °C using an injection moulded test specimen as described in EN ISO 1873-2 (80 x 10 x 4 mm).

**Falling weight impact test**

The Falling weight impact test was measured according to ISO6603-2 at 0 °C on injection moulded samples of 2 mm thickness.

**Tensile strength**

The tensile strength, including tensile stress at yield and strain at yield, is measured according to ISO 572-2 (cross head speed 50 mm/min). The tensile modulus is measured according to ISO 572-2 (cross head speed 1 mm/min).

**Particle sizes**

The particle sizes of dispersed phase rubber particles in the matrix phase of the heterophasic composition were determined according to the following procedure:

- sample specimens were stained with gaseous $RuO_4$ according to a procedure described in: Montezinos, D.; Wells, B.G.; Burns, J.L.: Polym. Sci. Polym. Lett. Ed. 1985, 23, 421-452.

- transmission electron micrographs were recorded with a Philips 300

- particle size evaluation was performed using the software PC_image 2.2.05 of Foster Findlay Associates (Newcastle upon Tyne, U.K.) First a binary picture was produced by setting a threshold value. The threshold value depends on the actual picture, but was about 150 for each of the pictures. Then the filter operations Holefill and Open were used. The number of passes for the Open function also depends on the picture and was from 1-3 for each of the pictures.

An exact description of each function can be found in the literature: Russ JC: The Image Processing Handbook. CRC Press London Tokyo, 1995, 2nd ed.

## Examples

**Catalyst**

A high yield $MgCl_2$ supported Ziegler Natta $TiCl_4$ catalyst was prepared according to example 1 of EP 1 028 985 B1 and used in the polymerisation. The cocatalyst was triethyl aluminium (TEAL) and the external donor was dicyclopentyldimethoxysilane (DCPDMS). The Al/Ti ratio was 200 mol/mol and the Al/donor ratio was 20 mol/mol. The catalyst was fed to the pre-polymerisation reactor, with a catalyst feed of 1.5 to 1.9 g/h. The pre-polymerisation reactor temperature was 30 °C. The catalyst was modified by addition of polymeric vinyl cyclohexane (VCH).

**Polymerisation**

The inventive and comparative examples were prepared in a connected series of reactors according to the conditions summarised in table 1. After a first pre-polymerisation step B1, the catalyst was fed to the slurry reactor,

where the polymerisation of the polypropylene homopolymer matrix phase was initiated. The slurry phase loop reactor B2 was then followed by a gas phase reactor B3 in series, in which the matrix phase of the polypropylene homopolymer was completed. The polymerisation temperature in the slurry phase loop reactor was 80 °C, whereas the temperature in the gas phase reactor was 95 °C. The split between the slurry and the gas phase reactor was 60 % to 40 %, respectively. A high $MFR_2$ of the matrix phase of between 200 and 220 g/10min could be achieved.

After transfer to a second gas phase reactor the elastomeric rubber disperse phase was produced by copolymerisation of propylene with ethylene comonomer. The operating temperature in the second gas phase reactor was varied between 70 °C and 90 °C, cf. data table 1. These high temperatures led to a drop in the intrinsic viscosity of the produced rubber phase. Therefore, the hydrogen feed could be reduced to afford a constant intrinsic viscosity of the rubber phase of about 2.0 dl/g. The inventive examples were conducted at 80 °C and 90 °C.

In the comparative examples, the ethylene feed in reactor B4 was set to an ethylene/propylene ratio of 480 mol/kmol. The inventive examples had higher ethylene/propylene ratios and a higher measured ethylene content in the disperse phase as shown in table 1.

Table 1 also provides the properties of the produced matrix phase and disperse phase polymer, as well as the significant properties of the produced heterophasic polypropylene copolymer composition prior to compounding.

The heterophasic polypropylene copolymers were then stabilised and formulated with the additives: 1500 ppm Irganox B215 (from Ciba), 400 ppm Ca-stearate, 4000 ppm GMS90, as well as 8000 ppm talc (cf. table 2). The formulated mixtures were compounded and pelletised with a W&P ZSK 70 extruder at a melt temperature from 190 to 200 °C.

Table 2 summarises the relevant properties of the comparative reference materials and the final inventive compositions and cup samples extruded from these compositions. All examples displayed high $MFR_2$ values of above 65 g/10 min, as well as a high tensile modulus of 1300 MPa or more. The Charpy values also demonstrate that the impact strength of the generated compositions was good.

Finally, a significant increase in the compression stability was found in the inventive examples over the comparative examples. This manifests itself in good top load values and an increased drop height, especially at low temperatures, of thin walled cup samples produced from the inventive compositions (cf. in particular, examples 1 and 2 vs. comp. examples C2 and C3).

The comparative example C4 was generated from an precursor material with an $MFR_2$ of 45 g/min by visbreaking, and having XS of 17 wt.%. This example shows that also a lower $MFR_2$ vis-broken composition will not achieve the high compression stability of the current invention.

| | **Comparative examples** | | | **Inventive examples** | | |
|---|---|---|---|---|---|---|
| **Table 1** | C1 | C2 | C3 | 1 | 2 | 3 |
| **B1 Prepolymerisation** | | | | | | |
| Al/Ti ratio (mol/mol) | 200 | 200 | 200 | 200 | 200 | 200 |
| Al/donor ratio (mol/mol) | 20 | 20 | 20 | 20 | 20 | 20 |
| Prepolym. temperature (°C) | 30 | 30 | 30 | 30 | 30 | 30 |
| **B2 Slurry phase reactor** | | | | | | |
| Loop reactor temperature (°C) | 80 °C | 80 °C | 80 °C | 80 °C | 80 °C | 80 °C |
| pressure (kPa) | 5500 kPa | 5500 kPa | 5500 kPa | 5500 kPa | 5500 kPa | 5500 kPa |
| H2/C3 ratio (mol/kmol) | 30 | 30 | 30 | 30 | 30 | 30 |
| Split B2/B3(%) | 60 | 55 | 60 | 60 | 60 | 50 |
| $MFR_2$ (g/10 min) | 210 | 260 | 250 | 220 | 230 | 270 |
| XS (%) | 2.4 | 1.9 | 1.5 | 1.7 | 1.9 | 2.0 |
| **B3 Gas phase reactor** | | | | | | |
| B3 temperature (°C) | 95 °C | 95 °C | 95 °C | 95 °C | 95 °C | 95 °C |
| pressure (kPa) | 3300 kPa | 3300 kPa | 3300 kPa | 3300 kPa | 3300 kPa | 3300 kPa |
| H2/C3 ratio (mol/kmol) | 150 | 150 | 150 | 150 | 150 | 150 |
| Split (%) | 40 | 45 | 40 | 40 | 40 | 50 |
| $MFR_2$ of matrix phase (g/10 min) | 200 | 210 | 220 | 210 | 220 | 220 |

(continued)

| Table 1 | Comparative examples | | | Inventive examples | | |
|---|---|---|---|---|---|---|
| | C1 | C2 | C3 | 1 | 2 | 3 |
| XS of matrix phase (%) | 2.0 | 1.2 | 1.4 | 1.4 | 1.5 | 1.7 |
| **B4 Gas phase reactor** | | | | | | |
| GPR2 temperature (°C) | 70 °C | 80 °C | 90 °C | 80 °C | 90 °C | 90 °C |
| pressure (kPa) | 3000 kPa | 3000 kPa | 3000 kPa | 3000 kPa | 3000 kPa | 3000 kPa |
| C2/C3 ratio (mol/kmol) | 480 | 480 | 480 | 940 | 900 | 780 |
| H2/C2 ratio (mol/kmol) | 320 | 200 | 150 | 200 | 150 | 160 |
| ethylene of disperse phase (wt%) | 37 | 36.1 | 36.6 | 52 | 54.8 | 52.5 |
| intrinsic viscosity of disperse phase (dl/g) | 2.1 | 2.1 | 1.9 | 2 | 2.1 | 2 |
| **Properties heterophasic copolymer** | | | | | | |
| $MFR_2$ (g/10 min) | 97 | 100 | 100 | 93 | 91 | 70 |
| XS (wt%) | 17.5 | 16.3 | 17.2 | 16.6 | 17.6 | 22.9 |
| disperse phase (wt%) | 15.2 | 14.7 | 15.3 | 15.1 | 15.7 | 21.2 |
| ethylene content (wt%) | 5.5 | 6 | 5.6 | 8.4 | 9.7 | 11.8 |

| Table 2 | Comparative examples | | | | Inventive examples | | |
|---|---|---|---|---|---|---|---|
| | C1 | C2 | C3 | C4 | 1 | 2 | 3 |
| **Final polymer composition** | | | | | | | |
| Pellet $MFR_2$(g/10min) | 110 | 103 | 100 | 90 | 94 | 91 | 75 |
| **DSC** | | | | | | | |
| Tm PP (°C) | 165.4 | 165.2 | 165.2 | 163 | 165.2 | 165.2 | 165.1 |
| Tcr (°C) | 132.3 | 132.2 | 132 | 125 | 131.9 | 132 | 131.8 |
| **Mechanical tests** | | | | | | | |
| Stress at yield (MPa) | 27.7 | 26 | 26.7 | 23 | 24.8 | 24.5 | 21.9 |
| Strain at yield (%) | 3.8 | 3.6 | 3.7 | | 3.2 | 3.2 | 3.1 |
| Tensile modulus (MPa) | 1620 | 1550 | 1570 | 1300 | 1540 | 1530 | 1360 |
| Charpy, notched, RT, ($kJ/m^2$) | 3.8 | 4.2 | 4 | 4.5 | 2.6 | 2.1 | 3.3 |
| Charpy, notched, -20 °C, ($kJ/m^2$) | 2.1 | 2.7 | 2.5 | 2.9 | 2 | 2 | 2.7 |
| **Falling weight impact, 0 °C** | | | | | | | |
| Total energy (J) | 13 | 13 | 15 | 11 | 7 | 7.5 | 4 |
| Failure type | br/d-br | br/d | br/d | | brittle | brittle | br |
| **Application tests, 850 ml cup** | | | | | | | |
| Top load (N) | 280 | 270 | 270 | 220 | 270 | 270 | 240 |
| | | | | | | | |
| Drop height, 850 ml/850 ml, RT.(m) | 3.2 | 3.9 | 2.9 | 3.5 | 2.8 | >5 | >5 |
| Drop height, 850 ml/850 ml, 0 °C (m) | 1.4 | <0.8 | <0.8 | 2.8 | 1.3 | 3.1 | 3.3 |

(continued)

| Table 2 | Comparative examples | | | | Inventive examples | | |
|---|---|---|---|---|---|---|---|
| | C1 | C2 | C3 | C4 | 1 | 2 | 3 |
| Drop height, 850 ml/200 ml, 0 °C (m) | 3.3 | 3.8 | 2.8 | | 4.5 | >5 | >5 |

**Claims**

1. A polypropylene composition comprising

a heterophasic propylene copolymer comprising:

a) a matrix phase (A) comprising a propylene homopolymer and/or a propylene copolymer, and
b) a disperse phase (B) comprising a propylene copolymer rubber dispersed in matrix phase (A),

wherein

(i) the polypropylene composition has a melt flow rate $MFR_2$ of 50 g/10min or higher,
(ii) the propylene copolymer rubber of the disperse phase (B) has a comonomer content of 40 wt.% or higher, and
(iii) the intrinsic viscosities IV of the disperse phase (B) and the $MFR_2$ of the matrix phase (A) fulfil the following relationship:

$$\frac{\log_{10}(MFR_2(A))}{IV(B)} \geq 0.60 .$$

2. Polypropylene composition according to claim 1, wherein the comonomer of the propylene copolymer of the disperse phase (B) is ethylene or a $C_4$ to $C_{10}$ alpha-olefin or any combination of these.

3. Polypropylene composition according to any of the previous claims, wherein the total comonomer content of the heterophasic propylene copolymer, as measured by FTIR, is at least 6.5 wt.%.

4. Polypropylene composition according to any of the previous claims, wherein the propylene copolymer rubber (B) is a bimodal composition.

5. Polypropylene composition according to any of the previous claims, wherein the intrinsic viscosity of the disperse phase (B) is from 1.8 to 3 dl/g.

6. Polypropylene composition according to any of the previous claims, wherein the polymer is nucleated with a nucleating agent.

7. Polypropylene composition according to any of the previous claims, wherein the polymer is nucleated with polymeric vinyl cyclohexane (VCH) or a similar nucleating agent.

8. Polypropylene composition according to any of the previous claims, wherein the amount of xylene solubles (XS) of the heterophasic copolymer is greater or equal to 15 wt.%.

9. Polypropylene composition according to any of the previous claims, wherein the top load force at collapse value, according to ASTM 2659-95, of a thin walled cup of the polypropylene composition is at least 235 N.

10. Polypropylene composition according to any of the previous claims, wherein the F50 drop height test value at 0 °C of a 850 ml thin walled cup filled with 200 ml water, according to ASTM-D 2463-95, is at least 4.0 m.

**11.** Process for preparing a heterophasic polypropylene copolymer, comprising the following stages (i) and (ii) in any sequence:

(i) preparation of the matrix phase of the heterophasic copolymer of the polypropylene composition, wherein stage (i) comprises the following steps:

B2) polymerisation of propylene to afford a polypropylene homopolymer, or the copolymerisation of propylene with an olefin comonomer to result in a polypropylene copolymer, step B2 being conducted in at least one slurry phase reactor, and
B3) polymerisation of propylene to afford a polypropylene homopolymer, or the copolymerisation of propylene with an olefin comonomer to result in a polypropylene copolymer, step B3 being conducted in at least one gas phase reactor.

(ii) preparation of the disperse phase of the heterophasic copolymer of the polypropylene composition, wherein stage (ii) comprises the following step:

B4) copolymerisation of propylene with an olefin comonomer to result in an olefin-propylene copolymer, step B4 being conducted in at least one gas phase reactor, and wherein:
a) the process B2 is conducted at a reactor temperature of between 70 and 110 °C and
b) the process B3 is conducted at a reactor temperature of higher than or equal to 90 °C, and
c) the process B4 is conducted at a reactor temperature of higher than 75 °C.

**12.** Process according to claim 11, wherein the comonomer ratio CR between the ethylene to propylene feed in the reactor of process step B4 is greater than 500 mol/kmol.

**13.** Process according to any of the claims 11 and 12, wherein after step B4, stage (ii) further comprises step:

B5) copolymerisation of propylene with an olefin comonomer to result in an olefin-propylene copolymer.

**14.** Process according any of the claims 11 to 13, wherein the process uses a Ziegler-Natta catalyst comprising a procatalyst component (a), a cocatalyst component (b) and an external electron donor (c).

**15.** Process according any of the claims 11 to 14, wherein the process uses a nucleated catalyst.

**16.** Process according to claim 15, wherein the catalyst is nucleated with polymeric vinyl cyclohexane (VCH).

**17.** Process according to any of claims 11 to 16 wherein a polypropylene composition according to any of claims 1 to 10 is produced.

**18.** Use of a polypropylene composition according to any of claims 1 to 10 for the production of moulded articles, preferably injection moulded articles.

**19.** Use of a polypropylene composition according to any of claims 1 to 10 for the production of thin-walled packaging articles, preferably plastic cups.

**20.** Article comprising a polypropylene composition according any of claims 1 to 10.

**21.** Article according to claim 20, wherein the article has been produced by injection moulding.

**Amended claims in accordance with Rule 137(2) EPC.**

**1.** A polypropylene composition comprising
a heterophasic propylene copolymer comprising:

a) a matrix phase (A) comprising a propylene homopolymer and/or a propylene copolymer, and
b) a disperse phase (B) comprising a propylene copolymer rubber dispersed in matrix phase (A),

wherein

(i) the polypropylene composition has a melt flow rate $MFR_2$ measured according to ISO 1133 of 50 g/10min or higher,
(ii) the propylene copolymer rubber of the disperse phase (B) has a comonomer content of 40 wt.% or higher, and
(iii) the intrinsic viscosities IV measured according to ISO 1628 of the disperse phase (B) and the $MFR_2$ of the matrix phase (A) fulfil the following relationship:

$$\frac{\log_{10}(MFR_2(A))}{IV(B)} \geq 0.60$$

and
(iv) propylene copolymer rubber particles dispersed in the matrix phase (A) of the polypropylene composition, having at least 50 % of particles with average particle sizes from 1.5 to 2.5μm.

**2.** Polypropylene composition according to claim 1, wherein the comonomer of the propylene copolymer of the disperse phase (B) is ethylene or a $C_4$ to $C_{10}$ alpha-olefin or any combination of these.

**3.** Polypropylene composition according to any of the previous claims, wherein the total comonomer content of the heterophasic propylene copolymer, as measured by FTIR, is at least 6.5 wt.%.

**4.** Polypropylene composition according to any of the previous claims, wherein the propylene copolymer rubber (B) is a bimodal composition.

**5.** Polypropylene composition according to any of the previous claims, wherein the intrinsic viscosity measured according to ISO 1628 of the disperse phase (B) is from 1.8 to 3 dl/g.

**6.** Polypropylene composition according to any of the previous claims, wherein the polymer is nucleated with a nucleating agent.

**7.** Polypropylene composition according to any of the previous claims, wherein the polymer is nucleated with polymeric vinyl cyclohexane (VCH) or a similar nucleating agent.

**8.** Polypropylene composition according to any of the previous claims, wherein the amount of xylene solubles (XS) of the heterophasic copolymer is greater or equal to 15 wt.%.

**9.** Polypropylene composition according to any of the previous claims, wherein the top load force at collapse value, according to ASTM 2659-95, of a thin walled cup of the polypropylene composition is at least 235 N.

**10.** Polypropylene composition according to any of the previous claims, wherein the F50 drop height test value at 0 °C of a 850 ml thin walled cup filled with 200 ml water, according to ASTM-D 2463-95, is at least 4.0 m.

**11.** Process for preparing a heterophasic polypropylene copolymer, comprising the following stages (i) and (ii) in any sequence:

(i) preparation of the matrix phase of the heterophasic copolymer of the polypropylene composition, wherein stage (i) comprises the following steps:

B2) polymerisation of propylene to afford a polypropylene homopolymer, or the copolymerisation of propylene with an olefin comonomer to result in a polypropylene copolymer, step B2 being conducted in at least one slurry phase reactor, and
B3) polymerisation of propylene to afford a polypropylene homopolymer, or the copolymerisation of propylene with an olefin comonomer to result in a polypropylene copolymer, step B3 being conducted in at least one gas phase reactor.

(ii) preparation of the disperse phase of the heterophasic copolymer of the polypropylene composition, wherein stage (ii) comprises the following step:

B4) copolymerisation of propylene with an olefin comonomer to result in an olefin-propylene copolymer, step B4 being conducted in at least one gas phase reactor, and wherein:

a) the process B2 is conducted at a reactor temperature of between 70 and 110 °C and
b) the process B3 is conducted at a reactor temperature of higher than or equal to 90 °C, and
c) the process B4 is conducted at a reactor temperature of higher than 75 °C.

**12.** Process according to claim 11, wherein the comonomer ratio CR between the ethylene to propylene feed in the reactor of process step B4 is greater than 500 mol/kmol.

**13.** Process according to any of the claims 11 and 12, wherein after step B4, stage (ii) further comprises step:

B5) copolymerisation of propylene with an olefin comonomer to result in an olefin-propylene copolymer.

**14.** Process according any of the claims 11 to 13, wherein the process uses a Ziegler-Natta catalyst comprising a procatalyst component (a), a cocatalyst component (b) and an external electron donor (c).

**15.** Process according any of the claims 11 to 14, wherein the process uses a nucleated catalyst.

**16.** Process according to claim 15, wherein the catalyst is nucleated with polymeric vinyl cyclohexane (VCH).

**17.** Use of a polypropylene composition according to any of claims 1 to 10 for the production of moulded articles, preferably injection moulded articles.

**18.** Use of a polypropylene composition according to any of claims 1 to 10 for the production of thin-walled packaging articles, preferably plastic cups.

**19.** Article comprising a polypropylene composition according any of claims 1 to 10.

**20.** Article according to claim 19, wherein the article has been produced by injection moulding.

**Fig. 1:**

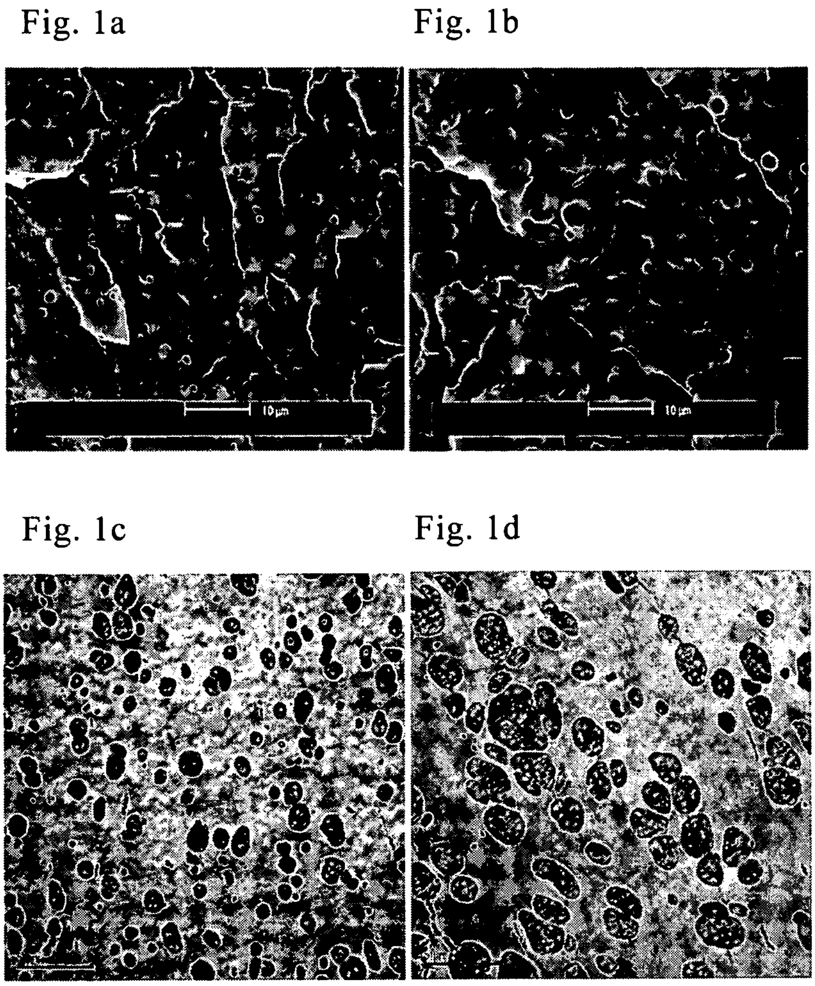

European Patent Office

# EUROPEAN SEARCH REPORT

Application Number
EP 06 02 6236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 659 151 A (BOREALIS TECH OY [FI]) 24 May 2006 (2006-05-24)<br>* abstract; claims 1-8 *<br>* page 2, paragraph 6 *<br>* page 3, paragraphs 13,17 *<br>* page 3, paragraph 22 *<br>----- | 1-6, 17-21 | INV.<br>C08L23/10<br>C08L23/12<br>C08L23/14<br>C08L23/16<br>C08F10/06<br>C08F210/06<br>C08F297/08<br>C08K5/00 |
| D,X | WO 99/24479 A (BOREALIS AS [DK]; HUOVINEN PAEIVI [FI]; JAEAESKELAEINEN PIRJO [FI]; KA) 20 May 1999 (1999-05-20)<br>* abstract; claims 1-44 *<br>* page 1, line 20 *<br>* page 9 *<br>* page 13 *<br>* page 14 *<br>----- | 1-21 | |
| X | EP 0 790 262 A1 (CHISSO CORP [JP] CHISSO CORP [JP]; TOYOTA MOTOR CO LTD [JP]) 20 August 1997 (1997-08-20)<br>* abstract; claims 1-11 *<br>* page 8, line 50 *<br>----- | 1-3,6,7, 17,18, 20,21 | TECHNICAL FIELDS SEARCHED (IPC) |
| D,X | EP 1 354 901 A1 (BOREALIS GMBH [AT]) 22 October 2003 (2003-10-22)<br>* abstract; claims 1-14 *<br>----- | 1-6, 8-10, 17-21 | C08L<br>C08F<br>C08K |
| X | WO 01/36502 A (BOREALIS TECH OY [FI]; MALM BO [FI]; JAEAESKELAEINEN PIRJO [FI]; VESTB) 25 May 2001 (2001-05-25)<br>* abstract; claims 1-9 *<br>* page 4 *<br>* page 7 *<br>-----<br>-/-- | 1,17-21 | |

The present search report has been drawn up for all claims

| Place of search | Date of completion of the search | Examiner |
|---|---|---|
| The Hague | 24 April 2007 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

8

EPO FORM 1503 03.82 (P04C01)

European Patent Office

# EUROPEAN SEARCH REPORT

Application Number
EP 06 02 6236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/68315 A (BOREALIS TECH OY [FI]; VESTBERG TORVALD [FI]; LESKINEN PAULI [FI]) 16 November 2000 (2000-11-16)<br>* abstract; claims 1-37 *<br>* page 1 *<br>* page 2 *<br>* page 6, line 2 *<br>* page 18, line 20; example 1 *<br>----- | 1-3,6,7, 11-21 | |
| X | EP 1 452 630 A (BOREALIS TECH OY [FI]) 1 September 2004 (2004-09-01)<br>* abstract; claims 1-9 *<br>* page 2, paragraph 9 *<br>* page 3, paragraphs 11,17 *<br>* page 4, paragraph 22 *<br>* page 5, paragraph 24 *<br>----- | 1-4,6,8, 20 | |
| E | WO 2007/017360 A (BASELL POLIOLEFINE ITALIA S R [IT]; CAVALIERI CLAUDIO [IT]; PRADELLA F) 15 February 2007 (2007-02-15)<br>* abstract; claims 1-8 *<br>----- | 1,11,17, 20 | TECHNICAL FIELDS SEARCHED (IPC) |
| X | EP 1 598 377 A (BOREALIS POLYMERS OY [FI]) 23 November 2005 (2005-11-23)<br>* the whole document *<br>----- | 1-5, 8-17,20 | |

The present search report has been drawn up for all claims

| Place of search | Date of completion of the search | Examiner |
|---|---|---|
| The Hague | 24 April 2007 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

**ANNEX TO THE EUROPEAN SEARCH REPORT ON EUROPEAN PATENT APPLICATION NO.** EP 06 02 6236

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2007

| Patent document cited in search report | | Publication date | Patent family member(s) | | | Publication date |
|---|---|---|---|---|---|---|
| EP 1659151 | A | 24-05-2006 | WO | 2006053661 | A1 | 26-05-2006 |
| WO 9924479 | A | 20-05-1999 | AT | 238357 | T | 15-05-2003 |
| | | | AU | 744784 | B2 | 07-03-2002 |
| | | | AU | 1035799 | A | 31-05-1999 |
| | | | BR | 9814854 | A | 03-10-2000 |
| | | | CA | 2308075 | A1 | 20-05-1999 |
| | | | CN | 1285851 | A | 28-02-2001 |
| | | | DE | 69813871 | D1 | 28-05-2003 |
| | | | DE | 69813871 | T2 | 26-02-2004 |
| | | | EP | 1028985 | A1 | 23-08-2000 |
| | | | ES | 2198759 | T3 | 01-02-2004 |
| | | | IL | 135896 | A | 18-12-2005 |
| | | | JP | 2001522904 | T | 20-11-2001 |
| | | | US | 6503993 | B1 | 07-01-2003 |
| EP 0790262 | A1 | 20-08-1997 | AU | 717990 | B2 | 06-04-2000 |
| | | | AU | 6838296 | A | 19-03-1997 |
| | | | CA | 2203876 | A1 | 06-03-1997 |
| | | | CN | 1169743 | A | 07-01-1998 |
| | | | DE | 69608240 | D1 | 15-06-2000 |
| | | | DE | 69608240 | T2 | 23-11-2000 |
| | | | WO | 9708218 | A1 | 06-03-1997 |
| | | | JP | 3231332 | B2 | 19-11-2001 |
| | | | TW | 416962 | B | 01-01-2001 |
| | | | US | 6005034 | A | 21-12-1999 |
| EP 1354901 | A1 | 22-10-2003 | AT | 321080 | T | 15-04-2006 |
| | | | DE | 60209955 | T2 | 16-11-2006 |
| WO 0136502 | A | 25-05-2001 | AT | 258195 | T | 15-02-2004 |
| | | | AU | 1388300 | A | 30-05-2001 |
| | | | CN | 1391587 | A | 15-01-2003 |
| | | | DE | 69914383 | D1 | 26-02-2004 |
| | | | DE | 69914383 | T2 | 28-10-2004 |
| | | | EP | 1244717 | A1 | 02-10-2002 |
| | | | US | 6723829 | B1 | 20-04-2004 |
| WO 0068315 | A | 16-11-2000 | AT | 299914 | T | 15-08-2005 |
| | | | AU | 771298 | B2 | 18-03-2004 |
| | | | AU | 4408300 | A | 21-11-2000 |
| | | | CA | 2372531 | A1 | 16-11-2000 |
| | | | CN | 1360616 | A | 24-07-2002 |
| | | | DE | 60021380 | D1 | 25-08-2005 |
| | | | DE | 60021380 | T2 | 27-04-2006 |
| | | | EP | 1183307 | A1 | 06-03-2002 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 06 02 6236

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2007

| Patent document cited in search report | | Publication date | Patent family member(s) | | | Publication date |
|---|---|---|---|---|---|---|
| WO 0068315 | A | | ES | 2245308 | T3 | 01-01-2006 |
| | | | JP | 2002544313 | T | 24-12-2002 |
| | | | US | 6747103 | B1 | 08-06-2004 |
| EP 1452630 | A | 01-09-2004 | WO | 2004076726 | A1 | 10-09-2004 |
| WO 2007017360 | A | 15-02-2007 | NONE | | | |
| EP 1598377 | A | 23-11-2005 | AU | 2005245592 | A1 | 01-12-2005 |
| | | | WO | 2005113613 | A1 | 01-12-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050038208 A
- EP 1354901 A
- EP 0790262 A
- EP 591224 A
- EP 1028985 A
- WO 9924479 A
- WO 9924501 A
- EP 1028985 B1


### Non-patent literature cited in the description


- Encyclopaedia of Polymer Science and Engineering. vol. 6, 545-558
- **MONTEZINOS, D ; WELLS, B.G ; BURNS, J.L.** *Polym. Sci. Polym. Lett. Ed.,* 1985, vol. 23, 421-452
- **RUSS JC.** The Image Processing Handbook. CRC Press, 1995